# FASCICULE DE BREVET EUROPEEN

(11) **EP 2 874 976 B1**
(45) Date de publication et mention de la délivrance du brevet: **31.10.2018**
(21) Numéro de dépôt: 13756564.4
(22) Date de dépôt: 12.07.2013
(51) Int. Cl.: C04B 37/00, B82Y 30/00

(54) **PROCEDE DE BRASAGE DE PIECES EN MATERIAU COMPOSITE A MATRICE CERAMIQUE AVEC INTEGRATION D'UN PION DANS LA LIAISON**
VERFAHREN ZUM HARTLÖTEN VON TEILEN AUS EINEM KERAMISCHEN MATRIXVERBUNDWERKSTOFF MIT EINEM GEBUNDENEN ROHMATERIAL
METHOD FOR THE BRAZING OF PARTS MADE FROM A CERAMIC MATRIX COMPOSITE MATERIAL, INCORPORATING A SLUG IN THE BOND

(30) Priorité: 18.07.2012 FR 1256949
(43) Date de publication de la demande: 27.05.2015
(73) Titulaire: Safran Ceramics, 33185 Le Haillan (FR); Commissariat à l'Energie Atomique et aux Energies Alternatives, 75015 Paris (FR)
(72) Inventeur: REVEL, Thomas, 33000 Bordeaux (FR); CONETE, Eric, 33700 Merignac (FR); PHILIPPE, Eric, 33700 Merignac (FR); ROUX, Guilhem, 38120 Saint Egreve (FR); BUCCI, Philippe, 38360 Engins (FR)
(74) Mandataire: Desormiere, Pierre-Louis
(86) Numéro de dépôt international: PCT/FR2013/051672
(87) Numéro de publication internationale: WO 2014/013166

(56) Documents cités:
- WO-A1-2006/010814
- WO-A1-2011/029785
- WO-A1-2011/029785
- WO-A1-2011/113760
- WO-A1-2011/113760
- JP-A- 10 061 622
- JP-A- 10 061 622

## Description

### Arrière-plan de l'invention

L'invention concerne l'assemblage par brasage des matériaux composites thermostructuraux, des matériaux composites à matrice céramique (CMC). Les matériaux CMC sont typiquement formés d'un substrat poreux, tel qu'un substrat fibreux poreux densifié par une matrice céramique. Les fibres du substrat peuvent être en carbone ou céramique. La matrice est en une céramique réfractaire telle que, par exemple, carbure, nitrure, borure ou oxyde réfractaire. Les matériaux CMC, comme, par exemple, les composites C/SiC (renfort en fibres de carbone et matrice en carbure de silicium), sont remarquables par leurs propriétés mécaniques, qui les rendent aptes à constituer des éléments de structure, et par leur capacité à conserver ces propriétés à des températures élevées.

Lors de la réalisation de structures en matériaux composites à matrice céramique, il est fréquent de réaliser celles-ci à partir d'éléments en matériaux CMC indépendants qui sont assemblés entre eux par brasage. Toutefois, le brasage des matériaux composites à matrice céramique est techniquement difficile et la contrainte à rupture du joint de brasure est souvent insuffisante vis-à-vis des efforts, en particulier de cisaillement, auxquels l'assemblage peut être soumis.

Les pièces en matériaux CMC présentent une forte rugosité en surface qui empêche une bonne répartition de la brasure dans la zone de formation du joint de brasure créant ainsi des zones de faiblesse dans la liaison brasée.

En outre, lors de la diffusion de la brasure entre les faces d'assemblage des pièces à braser, il se produit un dégagement d'espèces gazeuses dues à la réaction entre la brasure et les particules céramiques utilisées pour transporter la brasure par capillarité entre les faces d'assemblage. Une partie de ces espèces gazeuses sont emprisonnées à l'intérieur du joint de brasure, ce qui conduit à un joint de brasure poreux dans lequel subsistent localement des portions sans brasure entre les deux surfaces. Ce manque de matière entraîne des défauts dans la liaison entre les deux pièces et, par conséquent, une dégradation de la qualité de l'assemblage qui fragilise la liaison réalisée.

Des procédés de brasage de pièces en matériau composite sont notamment divulgués dans les documents WO 2011/113760, WO 2011/029985, JP 10 061622 et WO 2006/010814.

### Objet et résumé de l'invention

L'invention a pour but de fournir un procédé permettant un assemblage par brasage entre des pièces en matériau composite qui ne présente pas les inconvénients précités et qui permet notamment de réaliser des liaisons brasées ayant une tenue mécanique améliorée vis-à-vis des efforts de cisaillement.

Ce but est atteint avec un procédé d'assemblage par brasage entre une première pièce et une deuxième pièce en matériau composite à matrice céramique, les première et deuxième pièces comportant chacune une face d'assemblage destinée à être brasée avec la face d'assemblage de l'autre pièce, le procédé comprenant les étapes suivantes :
- réalisation d'au moins une perforation sur la face d'assemblage de la première pièce,
- interposition d'éléments capillaires entre les faces d'assemblage des première et deuxième pièces en matériau composite,
- mise en regard des première et deuxième pièces avec insertion d'un pion dans chaque perforation de la première pièce,
- placement d'une composition de brasure en contact avec une partie des éléments capillaires,
- traitement thermique pour liquéfier la composition de brasure de manière à répartir par capillarité la composition de brasure fondue entre les faces d'assemblage des première et deuxième pièces en matériau composite.

Ainsi, grâce à l'insertion d'un pion dans au moins une perforation présente sur une des deux pièces en matériau composite, il est possible d'ancrer solidement le joint de brasure dans le matériau de la pièce et renforcer significativement la tenue de la liaison brasée, en particulier en cisaillement.

La perforation ménagée sur la face d'assemblage d'une ou des deux pièces à assembler peut déboucher ou ne pas déboucher sur la face opposée à la face d'assemblage.

Selon un premier aspect de l'invention, un jeu est ménagé entre la paroi interne de chaque perforation et la paroi externe du pion inséré dans la perforation. La présence d'un tel jeu permet un dégazage lors du cycle de brasure, les espèces gazeuses étant évacuées par l'extrémité de la ou des performations débouchant en dehors des faces d'assemblages.

En outre, la présence de brasure au niveau de la ou des perforations peut-être contrôlée par une simple inspection visuelle à partir de la face où débouchent la ou les perforations. En effet, l'absence partielle ou totale de brasure dans le jeu présent entre un pion et une perforation indiquerait que le joint de brasure n'a pas été formé de manière uniforme sur l'ensemble de la zone de brasage et que la liaison peut alors comporter des zones de faiblesse.

Selon un deuxième aspect de l'invention, au moins une première perforation est réalisée sur la face d'assemblage de la première pièce tandis qu'une deuxième perforation est réalisée sur la face d'assemblage de la deuxième pièce. Les première et deuxième perforations sont alignées lors de la mise en regard des première et deuxième pièces, un pion étant inséré dans les première et deuxième perforations.

Selon un troisième aspect de l'invention, la deuxième pièce en matériau composite comporte sur sa face de collage un pion qui est inséré dans la perforation de la première pièce lors de la mise en regard des première et deuxième pièces. Dans ce cas, le pion peut être directement usiné sur la face de collage de la deuxième pièce.

Selon un quatrième aspect de l'invention, chaque pion est réalisé à partir d'un matériau similaire au matériau composite des première et deuxième pièces. Par matériau similaire, on entend soit le même matériau que celui des première et deuxième pièces, soit un matériau dont le coefficient de dilatation thermique diffère au plus de 40 % du coefficient de dilatation thermique du matériau composite des première et deuxième pièces.

Selon un cinquième aspect de l'invention, une pluralité de rainures est en outre réalisée sur la face d'assemblage d'au moins une des deux pièces en matériau composite, au moins une partie desdites rainures débouchant sur une ou plusieurs faces adjacentes à la face d'assemblage de la pièce.

Selon un sixième aspect de l'invention, une pluralité d'orifices est en outre réalisée sur la face d'assemblage d'au moins une des deux pièces en matériau composite, au moins une partie desdits orifices débouchant sur la face opposée à la face d'assemblage de la pièce.

Ainsi, grâce à la présence de rainures et/ou d'orifices sur au moins une des faces d'assemblage des pièces en matériau composite, des portions d'ancrage supplémentaires du joint de brasure dans le matériau de la pièce peuvent être formées. En outre les rainures et/ou orifices forment des voies de dégazage et de contrôle du joint de brasure supplémentaires dans les pièces.

Selon un septième aspect de l'invention, les éléments capillaires sont choisis parmi au moins un des éléments suivants : particules de SiC, voile de SiC, mat de carbone, particules de carbone et nanotubes de carbone.

Selon un huitième aspect de l'invention, les pièces en matériau composite à assembler par brasage sont des pièces d'arrière-corps de moteur aéronautique.

Selon un neuvième aspect de l'invention, la composition de brasure est une composition métallique.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels:
- les figures 1A à 1E montrent schématiquement le brasage de deux pièces en matériau composite à matrice céramique conformément à un mode de réalisation de l'invention,
- la figure 2 est une vue schématique en perspective de deux pièces destinées à être brasée conformément à un autre mode de réalisation de l'invention ;
- la figure 3 est une vue schématique en perspective de deux pièces destinées à être brasée conformément à un autre mode de réalisation de l'invention ;
- la figure 4 est une vue schématique en perspective de deux pièces destinées à être brasée conformément à un autre mode de réalisation de l'invention ;
- la figure 5 est une vue schématique en perspective de deux pièces destinées à être brasée conformément à un autre mode de réalisation de l'invention.

### Description détaillée de mode de réalisation

La procédé d'assemblage par brasage selon la présente invention s'applique à tout type de matériau composite thermostructural à matrice céramique (CMC), c'est-à-dire à tout matériau formé d'un renfort en fibres réfractaires (carbone ou céramique) densifié par une matrice céramique elle aussi réfractaire, tels que des matériaux C/SiC, SiC/SiC, C/C-SiC, etc. Cette méthode s'applique en outre à d'autres types de matériaux susceptibles de dégager des espèces gazeuses lors du brasage tels que les matériaux C/C ou les céramiques monolithiques telles que SiC, SiSiC, carbone vitreux ou pyrocarbone.

Conformément à l'invention, la liaison brasée formée selon le procédé de l'invention est renforcée par l'insertion d'au moins un pion dans une perforation réalisée dans l'une ou les deux pièces à assembler.

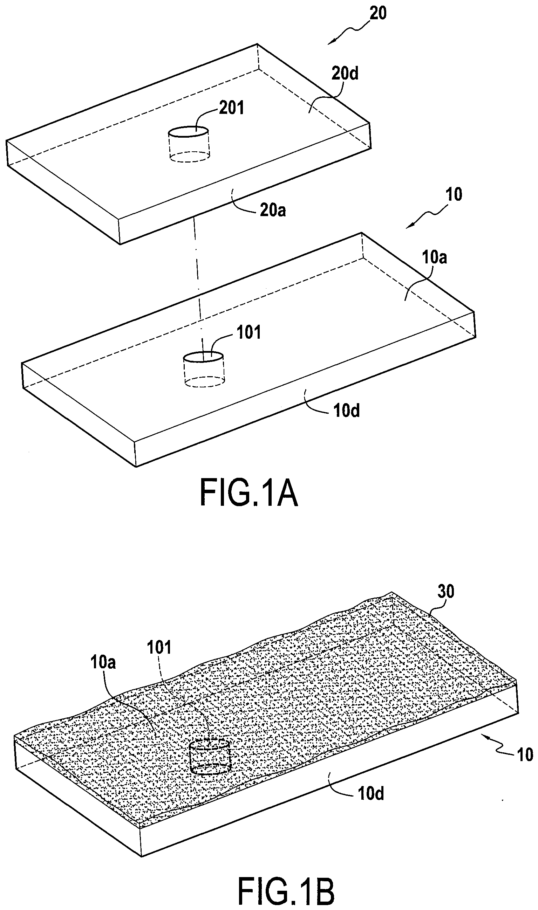

En référence aux figures 1A à 1E, un mode de mise en oeuvre d'un procédé conforme à l'invention, pour l'assemblage par brasage de deux pièces 10 et 20 en matériau CMC, comprend les étapes suivantes.

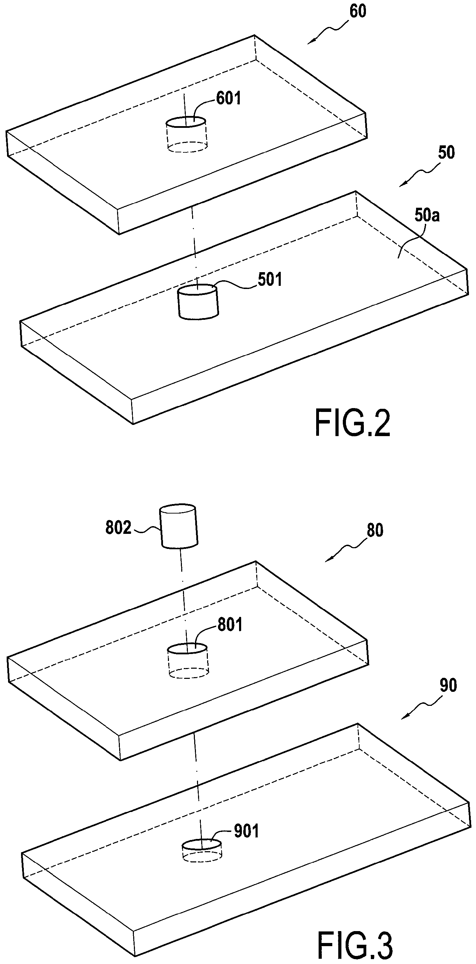

Comme illustré sur la figure 1A, la première étape consiste à réaliser une perforation dans chacune des pièces 10 et 20. Plus précisément, dans l'exemple décrit ici, une perforation 101 est usinée dans la pièce 10, la perforation 101 s'étendant depuis la face d'assemblage 10a et débouchant sur la face 10d opposée à la face d'assemblage 10a de la pièce 10 tandis qu'une perforation 201 est usinée dans la pièce 20, la perforation 201 s'étendant depuis la face d'assemblage 20a de la pièce 20 et débouchant sur la face 20d opposée à la face d'assemblage 20a. Selon une variante de réalisation, une ou les deux perforations 101 et 201 ne débouchent pas sur la face opposée à la face d'assemblage comme pour la perforation 901 décrite ci-après en relation avec la figure 3. Dans ce cas, la hauteur du pion est adaptée à la profondeur des perforations.

On dispose ensuite des éléments capillaires, ici des particules de SiC 30, sur la face d'assemblage 10a de la pièce 10 (figure 1B). Les particules de SiC sont destinées à permettre le transport et la diffusion de la brasure liquéfiée entre les deux pièces 10 et 20 lors de l'opération de brasage. D'autres éléments capillaires comme notamment un voile de SiC, un mat de carbone, des particules de carbone ou des nanotubes de carbone peuvent être utilisés.

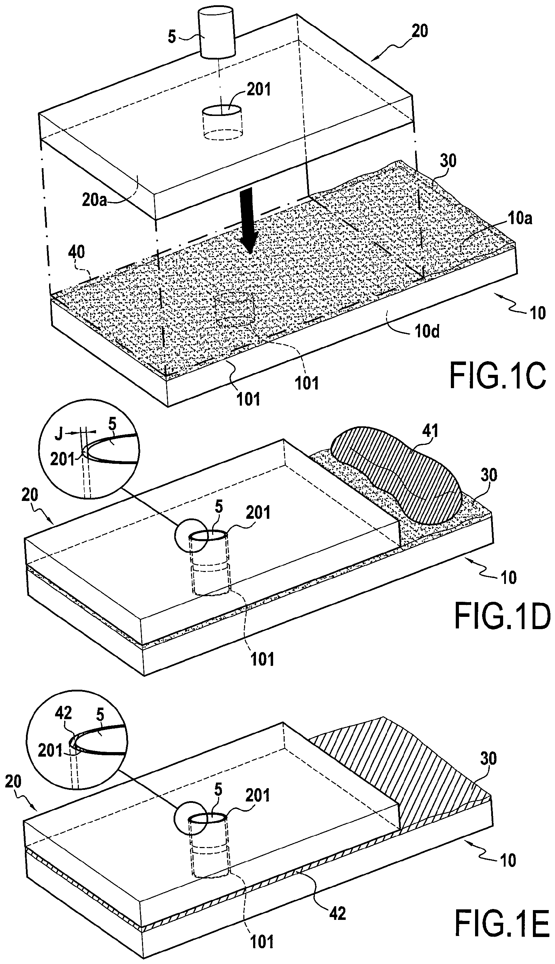

La pièce 20 est alors positionnée sur la pièce 10 de manière à mettre en regard les faces d'assemblage 10a et 20a en alignant les perforations 101 et 201 (figure 1C). La zone délimitée par la réunion des parties des faces d'assemblage 10a et 20a en regard correspond à la zone de brasage 40, c'est-à-dire la zone sur laquelle doit être formé le joint de brasure.

Une fois la pièce 20 positionnée sur la pièce 10, un pion de cisaillement 5 est alors inséré dans les perforations 101 et 201 (figures 1C et 1D). Une composition de brasure 41 sous forme d'une pâte solide est placée sur la face d'assemblage 10a en dehors de la zone de brasage 40 en contact avec les particules de SiC 30 présentes à l'extérieur de la zone de brasage 40. Le choix de la brasure est effectué notamment en fonction de sa compatibilité avec le matériau composite des pièces à assembler, c'est-à-dire qu'on choisit de préférence une composition non réactive ou à réactivité contrôlée avec le matériau composite et ayant un coefficient de dilatation thermique proche de celui du matériau composite. On utilisera par exemple des compositions à base de silicium telles que décrites dans les documents EP 806 402, US 5 975 407, US 2008/190552 et US 7 497 918 des alliages de silicium+siliciures métalliques, du silicium+germanium allié ou non, ainsi que des compositions métalliques connues sous le nom commercial Cusil-ABA®, Ticusil®, Incusil® ou Brasic®.

On peut également utiliser des compositions correspondant à des mélanges d'oxydes choisis parmi les oxydes suivants : SiO₂, Al₂O₃ et MgO.

L'étape suivante consiste à mettre en oeuvre le cycle de brasage en élevant la température jusqu'à rendre liquide la brasure 41 qui est alors aspirée par capillarité par les particules de SiC 30 et répartie sur toute la zone de brasage 40 présente entre les deux pièces 10 et 20.

Comme illustré très schématiquement sur la figure 1E, on obtient ainsi un joint de brasure 42 en contact avec les faces d'assemblage 10a et 20a des deux pièces 10 et 20.

Lors du cycle de brasage, la brasure et le pion réagissent ensemble pour former un assemblage solide formant ainsi un point d'ancrage du joint de brasure dans le matériau des pièces renforçant considérablement la tenue en cisaillement de la liaison brasée.

En outre, un jeu J est de préférence ménagé entre le pion 5 et les perforations 101 et 201 (figure 1D), par exemple en réalisant les perforations 101 et 201 avec un diamètre de 5,2 mm et le pion 5 avec un diamètre de 4,7 mm. Ainsi, grâce à la présence du jeu J entre le pion et les perforations, les espèces gazeuses produites lors du cycle de brasage sont évacuées par les perforations 101 et 201 au niveau de leurs parties débouchant respectivement sur les faces 10b et 20b des pièces 10 et 20. On limite ainsi la formation de poches de gaz dans le joint de brasure.

Le pion de cisaillement peut être usiné dans un matériau similaire au matériau composite des pièces à assembler. Le pion de cisaillement peut également être réalisé à partir d'un matériau présentant un coefficient de dilatation thermique suffisamment proche de celui du matériau des pièces à assembler, c'est-à-dire un matériau dont le coefficient de dilatation thermique diffère au plus de 40 % de celui du matériau des pièces.

Selon une variante de réalisation de l'invention illustrée en figure 2, un pion de cisaillement 501 est directement usiné sur la face d'assemblage 50a d'une première pièce 50 en matériau composite destinée à être assemblée par brasage avec une deuxième pièce 60 qui comprend à cet effet une perforation 601 formant un logement pour le pion 501. Les pièces 50 et 60 étant ensuite brasées dans les mêmes conditions que celles décrites ci-avant.

Selon une autre variante de réalisation de l'invention illustrée en figure 3, un pion de cisaillement 802 est introduit dans une perforation 801 usinée dans une première pièce 80 destinée à être assemblée par brasage avec une deuxième pièce 90 comportant une cavité non débouchante 901 dans laquelle le pion 802 pénètre également. Les pièces 80 et 90 sont ensuite brasées dans les mêmes conditions que celles décrites ci-avant.

Plusieurs pions de cisaillement peuvent être utilisés pour renforcer une même liaison brasée. Ils sont dans ce cas insérés dans des perforations distinctes ménagées dans une ou les deux pièces comme décrits ci-avant.

Par ailleurs, une ou les deux pièces à assembler par brasage peuvent comporter sur leur face de collage des cavités dont au moins une partie d'entre elles débouchent sur une partie ou face de la pièce située en dehors de la face de collage.

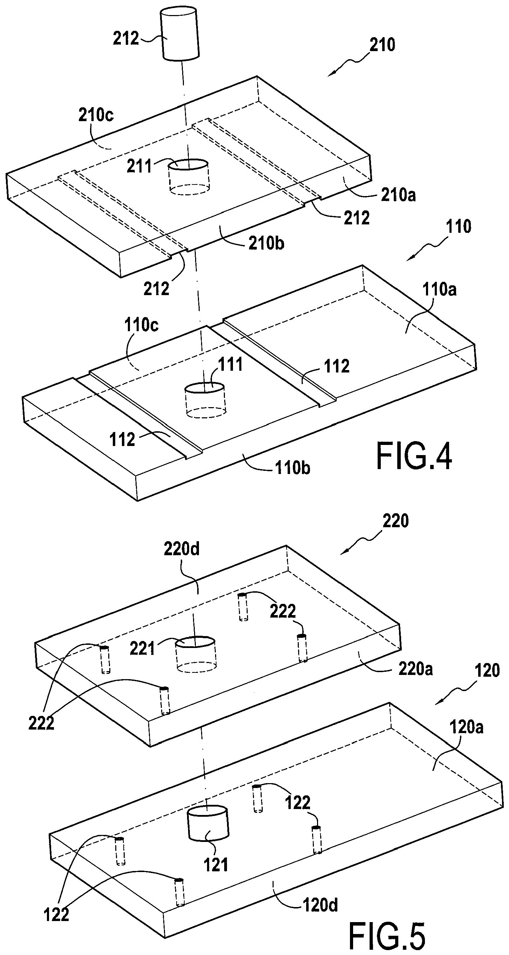

La figure 4 montre une variante de réalisation des pièces présentées sur la figure 1A. Sur la figure 4, des pièces 110 et 210 destinées à être assemblées par brasage conformément au procédé de l'invention comprennent respectivement, comme les pièces 10 et 20 de la figure 1A, des perforations 111 et 211 formant un logement pour un pion de cisaillement 212 inséré dans celles-ci avant le brasage. La pièce 110 comprend en outre sur sa face d'assemblage 110a des rainures 112 débouchant sur les faces latérales 110b et 110c de la pièce 110. De même, la pièce 210 comprend en outre sur sa face d'assemblage 210a des rainures 212 débouchant sur les faces latérales 210b et 210c de la pièce 210. Les rainures 112 et 212 permettent de former des portions d'ancrage supplémentaires du joint de brasure dans le matériau des pièces ainsi que des voies supplémentaires de dégazage et/ou de contrôle visuel du joint de brasure. L'absence partielle ou totale de brasure dans une ou plusieurs rainures indiquerait que le joint de brasure n'a pas été formé de manière uniforme sur l'ensemble de la zone de brasage et que la liaison peut alors comporter des zones de faiblesse. Suivant les conditions d'utilisation des pièces assemblées, il peut être défini un nombre et/ou une étendue de zones de faiblesse acceptables en-dessous desquels le joint de brasure n'a pas besoin d'être repris.

La figure 5 montre une variante de réalisation des pièces présentées sur la figure 2. Sur la figure 5, une première pièce 120 comprend sur sa face d'assemblage 120a un pion 121 tandis qu'une deuxième pièce 220, destinée à être assemblée par brasage avec la pièce 120 conformément au procédé de l'invention, comprend une perforation 221 destinée à former un logement pour le pion 121. La pièce 120 comprend en outre sur sa face d'assemblage 120a des orifices 122 débouchant sur la face opposée 120d à la face d'assemblage 120a de la pièce 120. De même, la pièce 220 comprend en outre sur sa face d'assemblage 220a des orifices 222 débouchant sur la face opposée 220d à la face d'assemblage 220a de la pièce 220. Les orifices 122 et 222 permettent de former des portions d'ancrage supplémentaires du joint de brasure dans le matériau des pièces ainsi que des voies supplémentaires de dégazage et/ou de contrôle visuel du joint de brasure. L'absence partielle ou totale de brasure dans un ou plusieurs orifices indiquerait que le joint de brasure n'a pas été formé de manière uniforme sur l'ensemble de la zone de brasage et que la liaison peut alors comporter des zones de faiblesse.

Le nombre, l'orientation, la forme et les dimensions des rainures ou des orifices sur chaque face d'assemblage des pièces en matériau composite peuvent être variées. Par ailleurs, dans le cas de rainures, des performations débouchant sur la face opposée à la face de collage de la pièce peuvent également être usinées dans le fond des rainures afin d'ajouter des voies supplémentaires de dégazage et/ou de contrôle du joint de brasure.

L'orientation des rainures est de préférence choisie de manière à former des portions d'ancrage dans le joint de brasure qui s'opposent aux principaux efforts auxquels l'assemblage est destiné à être soumis. Par exemple, les rainures peuvent s'étendre dans une direction sensiblement perpendiculaire à celle des efforts de cisaillement. En outre, deux séries de rainures s'étendant chacune dans des directions différentes peuvent être réalisées sur les faces de collage des pièces.

## Revendications

1. Procédé d'assemblage par brasage entre une première pièce (10) et une deuxième pièce (20) en matériau composite à matrice céramique (CMC), les première et deuxième pièces (10, 20) comportant chacune une face d'assemblage (10a ; 20a) destinée à être brasée avec la face d'assemblage de l'autre pièce, le procédé comprenant les étapes suivantes :
- réalisation d'au moins une perforation (101) sur la face d'assemblage de la première pièce (10),
- interposition d'éléments capillaires (30) entre les faces d'assemblage (10a, 20a) des première et deuxième pièces (10, 20) en matériau composite,
- mise en regard des première et deuxième pièces (10, 20) avec insertion d'un pion (5) dans chaque perforation de la première pièce (10),
- placement d'une composition de brasure (41) en contact avec une partie des éléments capillaires (30),
- traitement thermique pour liquéfier la composition de brasure (41) de manière à répartir par capillarité la composition de brasure fondue entre les faces d'assemblage des première et deuxième pièces en matériau composite.

2. Procédé selon la revendication 1, **caractérisé en ce qu'**un jeu (J) est ménagé entre la paroi interne de chaque perforation (101) et la paroi externe du pion (5) inséré dans ladite perforation.

3. Procédé selon la revendication 1 ou 2, **caractérisé en ce qu'**au moins une première perforation (101) est réalisée sur la face d'assemblage (10a) de la première pièce (10) et **en ce qu'**une deuxième perforation (201) est réalisée sur la face d'assemblage (20a) de la deuxième pièce (20), les première et deuxième perforations (101, 201) étant alignées lors de la mise en regard des première et deuxième pièces, un pion (5) étant inséré dans les première et deuxième perforations.

4. Procédé selon la revendication 1 ou 2, **caractérisé en ce que** la deuxième pièce (120) en matériau composite comporte sur sa face d'assemblage (120a) un pion (121) qui est inséré dans la perforation (221) de la première pièce (220) lors de la mise en regard des première et deuxième pièces.

5. Procédé selon l'une quelconque des revendications 1 à 4, caractérisé en ce chaque pion (5) est réalisé à partir d'un matériau similaire au matériau composite des première et deuxième pièces (10, 20).

6. Procédé selon l'une quelconque des revendications 1 à 5, **caractérisé en ce qu'**une pluralité de rainures (112) est en outre réalisée sur la face d'assemblage d'au moins une des deux pièces (110) en matériau composite, au moins une partie desdites rainures débouchant sur une ou plusieurs faces (110b, 110c) adjacentes à la face d'assemblage (110a) de la pièce (110).

7. Procédé selon l'une quelconque des revendications 1 à 6, **caractérisé en ce qu'**une pluralité d'orifices (122) est en outre réalisée sur la face d'assemblage (120a) d'au moins une des deux pièces (120) en matériau composite, au moins une partie desdits orifices (122) débouchant sur la face opposée (120d) à la face d'assemblage (120a) de la pièce (120).

8. Procédé selon l'une quelconque des revendications 1 à 7, **caractérisé en ce que** les éléments capillaires sont choisis parmi au moins un des éléments suivants : particules de SiC, voile de SiC, mat de carbone, particules de carbone et nanotubes de carbone.

9. Procédé selon l'une quelconque des revendications 1 à 8, **caractérisé en ce que** les pièces en matériau composite à assembler par brasage sont des pièces d'arrière-corps de moteur aéronautique.

10. Procédé selon l'une quelconque des revendications 1 à 9, **caractérisé en ce que** la composition de brasure est une composition métallique.

## Patentansprüche

1. Verfahren zum Verbinden durch Hartlöten eines ersten Teils (10) mit einem zweiten Teil (20) aus einem Verbundwerkstoff mit keramischer Matrix (CMC), wobei das erste und zweite Teil (10, 20) jeweils eine Verbindungsfläche (10a; 20a) aufweisen, die bestimmt ist, mit der Verbindungsfläche des anderen Teils hartgelötet zu werden, wobei das Verfahren die folgenden Schritte umfasst:
- Herstellen mindestens einer Perforation (101) auf der Verbindungsfläche des ersten Teils (10),
- Anordnen von Kapillarelementen (30) zwischen den Verbindungsflächen (10a, 20a) des ersten und zweiten Teils (10, 20) aus Verbundwerkstoff,
- Gegenüberstellen des ersten und zweiten Teils (10, 20) mit Einsetzen eines Stifts (5) in jede Perforation des ersten Teils (10),
- Verbringen einer Hartlötzusammensetzung (41) in Kontakt mit einem Teil der Kapillarelemente (30),
- thermisches Behandeln zwecks Verflüssigung der Hartlötzusammensetzung (41) derart, dass die geschmolzene Hartlötzusammensetzung zwischen den Verbindungsflächen des ersten und zweiten Teils aus Verbundwerkstoff durch Kapillarität verteilt wird.

2. Verfahren nach Anspruch 1, **dadurch gekennzeichnet, dass** ein Spiel (J) zwischen der Innenwand jeder Perforation (101) und der Außenwand des in die Perforation eingesetzten Stifts (5) gebildet ist.

3. Verfahren nach Anspruch 1 oder 2, **dadurch gekennzeichnet, dass** mindestens eine erste Perforation (101) auf der Verbindungsfläche (10a) des ersten Teils (10) ausgebildet ist und dass eine zweite Perforation (201) auf der Verbindungsfläche (20a) des zweiten Teils (20) ausgebildet ist, wobei die erste und zweite Perforation (101, 201) bei der Gegenüberstellung des ersten und zweiten Teils fluchten, wobei ein Stift (5) in die erste und zweite Perforation eingesetzt wird.

4. Verfahren nach Anspruch 1 oder 2, **dadurch gekennzeichnet, dass** das zweite Teil (120) aus Verbundwerkstoff auf seiner Verbindungsfläche (120a) einen Stift (121) aufweist, der bei der Gegenüberstellung des ersten und zweiten Teils in die Perforation (221) des ersten Teils (220) eingesetzt wird.

5. Verfahren nach einem der Ansprüche 1 bis 4, **dadurch gekennzeichnet, dass** jeder Stift (5) aus einem Material hergestellt ist, das dem Verbundwerkstoff des ersten und zweiten Teils (10, 20) ähnlich ist.

6. Verfahren nach einem der Ansprüche 1 bis 5, **dadurch gekennzeichnet, dass** ferner eine Vielzahl von Rillen (112) auf der Verbindungsfläche von mindestens einem der zwei Teile (110) aus Verbundwerkstoff ausgebildet wird, wobei mindestens ein Teil der Rillen auf einer oder mehreren, zu der Verbindungsfläche (110a) des Teils (110) benachbarten Flächen (110b, 110c) mündet.

7. Verfahren nach einem der Ansprüche 1 bis 6, **dadurch gekennzeichnet, dass** ferner eine Vielzahl von Öffnungen (122) auf der Verbindungsfläche (120a) von mindestens einem der zwei Teile (120) aus Verbundwerkstoff ausgebildet wird, wobei mindestens ein Teil der Öffnungen (122) auf der Seite (120d) gegenüber der Verbindungsfläche (120a) des Teils (120) mündet.

8. Verfahren nach einem der Ansprüche 1 bis 7, **dadurch gekennzeichnet, dass** die Kapillarelemente aus mindestens einem der folgenden Elemente ausgewählt werden: SiC-Partikel, SiC-Bahn, Karbonmatte, Karbonpartikel und Karbon-Nanoröhrchen.

9. Verfahren nach einem der Ansprüche 1 bis 8, **dadurch gekennzeichnet, dass** die durch Hartlöten zu verbindenden Teile aus Verbundwerkstoff Heckkörperteile eines Flugzeugmotors sind.

10. Verfahren nach einem der Ansprüche 1 bis 9, **dadurch gekennzeichnet, dass** die Hartlötzusammensetzung eine Metallzusammensetzung ist.

## Claims

1. A method of assembling together by brazing first and second parts (10, 20) made of ceramic matrix composite material, each of the first and second parts (10, 20) having an assembly face (10a; 20a) for brazing with the assembly face of the other part, the method comprising the following steps:
• making at least one perforation (101) in the assembly face of the first part (10);
• interposing capillary elements (30) between the assembly faces (10a, 20a) of the first and second parts (10, 20) made of composite material;
• placing the first and second parts (10, 20) facing each other while inserting a peg (5) in each perforation of the first part (10);
• placing a brazing composition (41) in contact with a portion of the capillary elements (30); and
• applying heat treatment to liquefy the brazing composition (41) so as to cause the molten brazing composition to spread by capillarity between the assembly faces of the composite material parts.

2. A method according to claim 1, **characterized in that** clearance (J) is provided between the inside wall of each perforation (101) and the outside wall of the peg (5) inserted in said perforation.

3. A method according to claim 1 or 2, **characterized in that** at least a first perforation (101) is made in the assembly face (10a) of the first part (10) and **in that** a second perforation (201) is made in the assembly face (20a) of the second part (20), the first and second perforations (101, 201) being in alignment when the first and second parts are placed facing each other, a peg (5) being inserted in the first and second perforations.

4. A method according to claim 1 or claim 2, **characterized in that** the second composite material part (120) includes a peg (121) on its assembly face (120a), the peg being inserted in the perforation (221) of the first part (220) when the first and second parts are placed facing each other.

5. A method according to any one of claims 1 to 4, **characterized in that** each peg (5) is made out of a material similar to the composite material of the first and second parts (10, 20).

6. A method according to any one of claims 1 to 5, **characterized in that** a plurality of grooves (112) are also made in the assembly face of at least one of the two composite material parts (110), at least some of said grooves opening out into one or more faces (110b, 110c) adjacent to the assembly face (110a) of the part (110).

7. A method according to any one of claims 1 to 6, **characterized in that** a plurality of orifices (122) are also made in the assembly face (120a) of at least one of the two composite material parts (120), at least some of said orifices (122) opening out into the face (120d) opposite from the assembly face (120a) of the part (120).

8. A method according to any one of claims 1 to 7, **characterized in that** the capillary elements are selected from at least one of the following elements: particles of SiC, a web of SiC, a mat of carbon, particles of carbon, and nanotubes of carbon.

9. A method according to any one of claims 1 to 8, **characterized in that** the composite material parts for assembling together by brazing are afterbody parts of an aeroengine.

10. A method according to any one of claims 1 to 9, **characterized in that** the brazing composition is a metallic composition.
